# EUROPÄISCHE PATENTANMELDUNG

(11) **EP 3 267 181 A1**
(43) Veröffentlichungstag der Anmeldung: **10.01.2018**
(21) Anmeldenummer: 16178376.6
(22) Anmeldetag: 07.07.2016
(51) Int. Cl.: G01N 21/51

(54) **VORRICHTUNG ZUM MESSEN BIOLOGISCHER UND/ODER CHEMISCHER PROBEN**

(71) Anmelder: PerkinElmer Cellular Technologies Germany GmbH, 22525 Hamburg (DE)
(72) Erfinder: GARBOW, Norbert, 22589 hamburg (DE)
(74) Vertreter: dompatent von Kreisler Selting Werner - Partnerschaft von Patent- und Rechtsanwälten mbB

(57) **Zusammenfassung**

Eine Vorrichtung zum Messen biologischer Proben weist eine Beleuchtungseinrichtung (10) zum Beleuchten einer Probe auf. Die Probe ist in einer Mikrotiterplatte (12) angeordnet. Der Beleuchtungseinrichtung (10) gegenüberliegend ist ein Detektor (16) vorgesehen. Zum Verbessern der Messergebnisse ist im Strahlengang dem Detektor vorgelagert eine in ihrer Form und/oder Lage variable Blende (34) angeordnet. Alternativ kann der Detektor (16) mehrere, insbesondere getrennt auslesbare Messbereiche (18, 20) aufweisen.

## Beschreibung

Die Erfindung betrifft eine Vorrichtung zum Messen biologischer und/oder chemischer Proben.

Derartige Vorrichtungen weisen eine Beleuchtungseinrichtung zum Beleuchten der Probe auf. Hierdurch kann die Probe mit sichtbarem oder nicht sichtbarem Licht beleuchtet bzw. bestrahlt werden. Mit Hilfe einer Halteeinrichtung erfolgt ein Fixieren bzw. Halten eines die Probe aufweisenden Probenträgers. Bei dem Probenträger handelt es sich üblicherweise um eine Titerplatte oder Mikrotiterplatte. Die Beleuchtungseinrichtung, die insbesondere auch Linsen, optische Filter und dergleichen umfassen kann, beleuchtet hierbei vorzugsweise stets nur ein Well einer Titer- oder Mikrotiterplatte. Insbesondere auf der der Beleuchtungseinrichtung gegenüberliegenden Seite der Halteeinrichtung, d. h. der der Probe gegenüberliegenden Seite ist eine Detektor vorgesehen. Mit Hilfe des Detektors erfolgt ein Erfassen der von der Beleuchtungseinrichtung abgegebenen und an der Probe beeinflussten Strahlung.

Ein derartiges Messverfahren ist das Messen der Absorption der Probe. Hierbei erfolgt ein Vergleich der von der Beleuchtungseinrichtung abgegebenen Strahlung bzw. der vom Detektor ohne Vorsehen einer zu messenden Probe detektierten Strahlung mit der Strahlung, die vom Detektor erfasst wird, wenn eine Probe vorhanden ist.

Ein interessanter Messwert ist ferner das Charakterisieren der Trübung der Probe.

Generell besteht bei derartigen Messungen die Problematik, dass durch Ablenkung der von der Beleuchtungseinrichtung abgegebenen Strahlung die Messung verfälscht werden kann. Beispielsweise werden die Strahlen an der oftmals gekrümmten Oberfläche der Probe gebrochen, so dass es je nach Stärke und Position der Krümmung an der Oberfläche vorkommen kann, dass ein Teil der Strahlung nicht mehr auf den Detektor trifft. Ferner treten Reflektionen und Brechungen an der Unterseite des Probenträgers am Wellboden und dergleichen auf. Gegebenenfalls werden Strahlen zwischen zwei Wells durch eine Reflektion an den Wellwänden nach oben zum Detektor geleitet und verfälschen die Messung. In umgekehrter Geometrie (Beleuchtung von oben) kann Licht durch die Brechung an der Flüssigkeitsoberfläche in die Wände des wells eingekoppelt werden. Insbesondere bei Titerplatten aus klarem Kunststoff kann durch derartige Effekte die Messung verfälscht werden.

Aufgabe der Erfindung ist es eine Vorrichtung zum Messen biologischer Proben zu schaffen, mit der die Messergebnisse verbessert werden können.

Die Lösung der Aufgabe erfolgt erfindungsgemäß durch die Merkmale des Anspruchs 1 oder 6.

Die erfindungsgemäße Vorrichtung weist eine Beleuchtungseinrichtung zum Beleuchten der zu messenden Probe, eine Halteeinrichtung zum Halten eines die Probe aufweisenden Probenträgers, bei dem es sich insbesondere um eine Titerplatte oder eine Mikrotiterplatte handelt sowie einen Detektor zum Detektieren von durch die Probe beeinflusster Strahlung auf. Um die Messergebnisse zu verbessern ist im Strahlengang dem Detektor vorgelagert eine Blende angeordnet. Erfindungsgemäß ist die Blende derart ausgestaltet, dass sie in ihrer Form und/oder Lage veränderbar ist. Hierdurch ist es möglich je nach Anwendungsfall einen oder mehrere bestimmten Bereich des Detektors ein- oder auszublenden. Erfolgt beispielsweise eine Absorptionsmessung ist es vorteilhaft, einen Detektor mit verhältnismäßig großer Fläche vorzusehen und vor diesem entsprechend eine weit geöffnete Blende anzuordnen. Variationen der Probenoberfläche haben dann den geringsten Einfluss auf das Ergebnis. Gegebenenfalls kann die Blende auch aus dem Strahlengang heraus bewegt bzw. heraus geschwenkt werden. Bei einer Messung der Trübung einer Probe werden bessere Messergebnisse erzielt, wenn ein verhältnismäßig kleiner Detektor genutzt wird, da dann weniger von dem in der Probe aus der Strahlrichtung herausgestreuten Licht ungewollt auf den Detektor trifft. Mit Hilfe einer entsprechenden erfindungsgemäßen Blende kann ein großer Detektor vorgesehen werden, dessen beispielsweise äußerer Bereich durch die Blende abgedeckt wird, so dass nur ein kleiner Bereich des Detektors zur Messung der Trübung genutzt wird. Hierdurch können die Messergebnisse deutlich verbessert werden. Umgekehrt ist es auch möglich die Blende derart anzuordnen und/oder auszugestalten, dass beispielsweise nur die durch Streuung der eine Trübung hervorufenden Partikel abgelenkten Strahlen zum Detektor gelangende Strahlung gemessen wird. Diese kann bei der Beurteilung der Messergebnisse berücksichtigt werden.

In bevorzugter Ausführungsform kann die Lage der Blende durch Verschwenken und/oder Verschieben verändert werden. Hierbei ist ein Verändern der Lage in Richtung des Strahlengangs aber auch senkrecht zum Strahlengang möglich. Ferner sind auch Kombinationen dieser beiden Bewegungsrichtungen möglich. Hierdurch kann auf einfache Weise ein klar definierter Bereich des Detektors ein- oder ausgeblendet werden. Erfindungsgemäß ist es somit möglich, einen Detektor mit einer großen Detektorfläche zu verwenden, so dass unterschiedliche Messungen mit ein und demselben Detektor durchgeführt werden, indem je nach Art der Messung beispielsweise Teile des Detektors ausgeblendet werden.

Verglichen mit der Größe des Beleuchtungsstrahles ist es bevorzugt Detektoren zu verwenden, die eine mindestens 3-fach größere Fläche aufweisen. Vorzugsweise weist die Blende eine Öffnung auf, die in ihrer Größe oder Form veränderbar ist. Bevorzugt ist hierbei, dass die Form der Öffnung der Form der zu untersuchenden Probe entspricht, so dass es besonders bevorzugt ist, eine kreisförmige Öffnung vorzusehen, deren Durchmesser veränderbar ist.

Durch Verändern der Form, Größe und/oder der Lage der Blende ist es möglich die Blende derart anzuordnen und/oder einzustellen, dass auf den Detektor im Wesentlichen keine von der Probe oder dem Probenträger gestreute Strahlung unbeabsichtigt zum Detektor gelangt. Insbesondere ist bevorzugt, unbeabsichtigte Streulichtbeiträge auf weniger als 1%, besonders bevorzugt auf weniger als 0.1% der zur Beleuchtung genutzten Lichtstärke zu begrenzen.

In einer weiteren bevorzugten Ausführungsform, die eine selbstständige Erfindung darstellt, ist anstelle einer veränderbaren Blende ein Detektor mit mehreren Messbereichen vorgesehen. Die einzelnen Messbereiche können insbesondere getrennt voneinander ausgelesen werden. Mit einem derartigen Detektor können entsprechend dem Vorsehen einer Blende die Messergebnisse deutlich verbessert werden. Je nach Art der durchgeführten Messung werden die entsprechenden Bereiche des Detektors ausgelesen.

Vorzugsweise wird ein Detektor eingesetzt, der eine hohe Dynamik aufweist. Das Auslesen der entsprechenden Bereiche muss hier innerhalb kürzester Zeit insbesondere in weniger als 10ms erfolgen. Ein geeigneter Detektor mit entsprechender Dynamik ist beispielsweise eine Photodiode mit geeigneter Ausleseelektronik.

Vorzugsweise weist der Detektor einen inneren Messbereich und einen äußeren Messbereich auf. Hierbei kann der innere Messbereich in besonders bevorzugter Ausführungsform den äußeren Messbereich insbesondere vollständig umgeben. Bevorzugt ist es des Weiteren, dass der innere Messbereich rund, insbesondere kreisrund ausgebildet ist. Bevorzugt ist es, hierbei, dass der äußere Messbereich ringförmig ausgebildet ist und somit den inneren Raum des Messbereichs vollständig umgibt.

Des Weiteren ist es bevorzugt, dass die einzelnen Messbereiche aus Teilbereichen zusammengesetzt sind. Dies hat den Vorteil, dass beim Kombinieren unterschiedliche Teilbereiche, die bei einer bestimmten Messung interessanten Bereiche unterschiedlich ausgebildet werden können. Beispielsweise kann somit auf einfache Weise die Größe und/oder Form des inneren und/oder des äußeren Messbereichs variiert werden.

Besonders bevorzugt ist es, dass der innere Messbereich derart ausgebildet ist, dass auf diesen im Wesentlichen keine von der Probe oder dem Probenträger gestreute Strahlung zum Detektor gelangt. Für den äußeren Meßbereich ist es bevorzugt ihn so auszubilden, dass möglichst keine Strahlung detektiert wird, die ohne Ablenkung oder Streuung durch die Probe durchtritt. Insbesondere sollte der Anteil an nicht abgelenkter Strahlung, die auf diesen äußeren Detektrobereich trifft kleiner als 1%, besonders bevorzugt kleiner als 0.1% der eingesetzten Lichtmenge sein.

Bevorzugt ist es ferner, dass die von der Probe gestreute, aber insbesondere nicht die ungestreute transmittierte oder die vom Probenträger gestreute Strahlung zum Detektor gelangt. Durch derartig ausgebildete oder angeordnete Blenden kann die Trübungsmessung weiter verbessert werden.

Durch Vorsehen eines Detektors mit unterschiedlichen, insbesondere mindestens zwei Detektorbereichen, die getrennt voneinander ausgelesen werden können, können unterschiedliche Messungen einer biologischen und/oder chemischen Probe mit verbesserter Qualität durchgeführt werden. Insbesondere ist es auch möglich, unterschiedliche Messungen gleichzeitig durchzuführen. Beispielsweise ist es möglich eine Absorptionsmessung, eine Messung der Trübung und eine Messung der gestreuten Strahlung durchzuführen.

Desweiteren ist es möglich die Ablenkung bzw. Aufweitung des Beleuchtungsstrahls, hervorgerufen durch die Eigenschaften der Flüssigkeitsoberfläche, zu messen. Dies kann in Abhängigkeit von zugefügten Reagenzien oder dergleichen gemessen werden, wobei durch die Zuführung von Reagenzien ebenfalls Veränderungen erfolgen. Hierzu ist es bevorzugt beide Detektorbereiche zu untersuchen und vorzugsweise Trübungseffekte auszuschließen.

Selbstverständlich ist es möglich die beiden vorstehend beschriebenen Erfindungen betreffend die Vorrichtung zum Messen biologischer Proben mit einer variablen Blende bzw. mit einem mehrere Bereiche aufweisenden Detektor auch miteinander zu kombinieren.

In der vorstehend beschriebenen Ausführungsform ist es bevorzugt, dass der Probenträger zwischen der Beleuchtungseinrichtung und dem Detektor angeordnet ist. Bevorzugt ist ferner als Probenträger eine Titerplatte oder eine Mikrotiterplatte vorgesehen, wobei von der Beleuchtungseinrichtung nur ein Well beleuchtet wird.

Nachfolgend wird die Erfindung anhand einer bevorzugten Ausführungsform unter Bezugnahme auf die anliegenden Zeichnungen näher erläutert.

Es zeigen:
- Fig. 1: eine schematische Darstellung einer ersten bevorzugten Ausführungsform der Erfindung und
- Fig. 2: eine schematische Darstellung einer zweiten bevorzugten Ausführungsform der Erfindung.

In den Fign. ist stark schematisiert eine erfindungsgemäße Vorrichtung dargestellt. Diese weist eine Beleuchtungseinrichtung 10 auf. Die Beleuchtungseinrichtung 10 beleuchtet einen von einer nicht dargestellten Halteeinrichtung gehaltenen Probenträger 12, bei dem es sich im dargestellten Ausführungsbeispiel um eine Titerplatte mit mehreren Wells 14 handelt. Der Beleuchtungseinrichtung 10 gegenüber ist ein Detektor angeordnet.

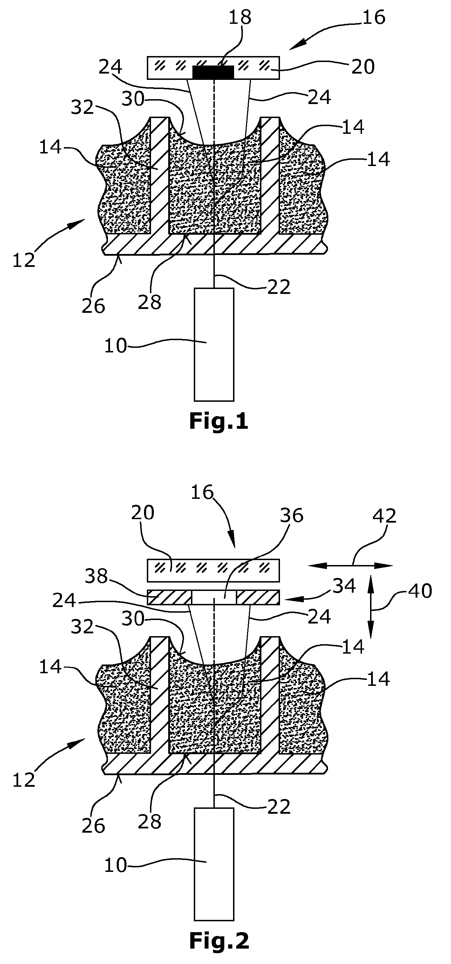

Bei dem in Fig. 1 dargestellten Ausführungsbeispiel handelt es sich um einen Detektor 16, mit einem inneren Messbereich 18 und einem äußeren Messbereich 20. Der innere Messbereich 18 ist kreisrund aufgebaut und von dem äußeren ringförmig ausgebildeten Messbereich 20 umgeben. Zur Anpassung können die einzelnen Messbereiche aus unterschiedlichen Teilbereichen aufgebaut sein. Die einzelnen Messbereiche 18, 20 können gesondert ausgelesen werden.

Es ist des Weiteren ein Strahl 22 dargestellt, der von der Beleuchtungseinrichtung 10 ausgehend in der Probe teilweise abgelenkt wird, so dass im dargestellten Beispiel zusätzliche Teilstrahlen 24 entstehen. Wie dargestellt, trifft der Hauptstrahl 22 auf den inneren Detektor 18 und die beiden Teilstrahlen 24 auf den äußeren Detektor 20. Der Strahl kann ferner beispielsweise noch an einer Unterseite 26 des Probenträgers 12 sowie an einem Wellboden 28 gebeugt oder auch teilweise reflektiert werden. Auch an einer Oberfläche 30 der Probe kann eine Brechung entstehen. Insbesondere bei schmalen bzw. engen Wells 14 kann auch in einer Trennwand 32 zwischen benachbarten Wells 14 eine mehrfache Reflektion eines Strahls erfolgen, so dass auch durch diesen Bereich Teile der von der Beleuchtungseinrichtung 10 abgegebenen Strahlung zum Detektor 16 gelangen.

Bei dem in Fig. 2 dargestellten Ausführungsbeispiel ist anstelle eines Detektors 16 mit mehreren Bereichen 18, 20 ein Detektor 16 mit nur einem Messbereich vorgesehen. Im Strahlengang dem Detektor 16 vorgeschaltet ist eine Blende 34. Die Blende 34 weist im dargestellten Ausführungsbeispiel eine kreisförmige Öffnung 36 auf, die von einem Blendenring 38 umgeben ist. Beispielsweise kann der Durchmesser der Öffnung 36 entsprechend einer Kamerablende (Iris) variiert werden. Vorteilhaft kann auch eine 'invertierte' Blende sein, die in der Mitte das durchtretende Licht abblockt und einen ringförmigen Transmissionsbereich aufweist. Des Weiteren ist es bevorzugt, dass die Blende in Richtung des Strahlengangs, das heißt in Richtung eines Pfeils 40 verschiebbar ist. Auch ein Verschwenken oder Verschieben senkrecht zum Strahlengang in Richtung eines Pfeils 42 ist möglich, um beispielsweise die Blende auch vollständig aus dem Strahlengang zu entfernen.

## Patentansprüche

1. Vorrichtung zum Messen biologischer Proben, mit
einer Beleuchtungseinrichtung (10) zum Beleuchten der zu messenden Probe,
einer Halteeinrichtung zum Halten eines die Probe aufweisenden Probenträgers (12) und
einem Detektor (16) zur Detektion von durch die Probe beeinflusster Strahlung (22, 24),
**gekennzeichnet durch**
eine im Strahlengang dem Detektor (16) vorgelagerte Blende (34), wobei die Blende (34) in ihrer Form und/oder Lage veränderbar ist, um Bereiche des Strahlengangs ein- oder auszublenden.

2. Vorrichtung nach Anspruch 1, **dadurch gekennzeichnet, dass** die Blende (34) verschwenkbar und/oder verschiebbar ist.

3. Vorrichtung nach Anspruch 1 oder 2, **dadurch gekennzeichnet, dass** die Blende (34) eine in ihrer Form und/oder Größe veränderbare Öffnung (36) aufweist.

4. Vorrichtung nach Anspruch 3, **dadurch gekennzeichnet, dass** die Öffnung (36) kreisförmig ist und der Durchmesser der Öffnung (36) veränderbar ist.

5. Vorrichtung nach einem der Ansprüche 1 bis 4, **dadurch gekennzeichnet, dass** die Blende derart angeordnet und/oder einstellbar ist, dass auf den Detektor (16) im Wesentlichen keine von der Probe und/oder dem Probenträger gestreute Strahlung zum Detektor (16) gelangt.

6. Vorrichtung zum Messen biologischer Proben, mit
einer Beleuchtungseinrichtung (10) zum Beleuchten der zu messenden Probe,
einer Halteeinrichtung zum Halten eines die Probe aufweisenden Probenträgers (12) und
einem Detektor (16) zur Detektion von durch die Probe beeinflusster Strahlung (22, 24),
**dadurch gekennzeichnet,**
**dass** der Detektor (16) mehrere insbesondere getrennt auslesbare Messbereiche (18, 20) aufweist.

7. Vorrichtung nach Anspruch 6, **dadurch gekennzeichnet, dass** der Detektor (16) einen inneren Messbereich (18) und zumindest einen äußeren Messbereich (20) aufweist.

8. Vorrichtung nach Anspruch 7, **dadurch gekennzeichnet, dass** der innere Messbereich (18) insbesondere vollständig von dem äußeren Messbereich (20) umgeben ist.

9. Vorrichtung nach Anspruch 7 oder 8, **dadurch gekennzeichnet, dass** der innere Messbereich (18) rund, insbesondere kreisrund ausgebildet ist.

10. Vorrichtung nach einem der Ansprüche 7 bis 9, **dadurch gekennzeichnet, dass** der äußere Messbereich (20) ringförmig ausgebildet ist.

11. Vorrichtung nach einem der Ansprüche 7 bis 10, **dadurch gekennzeichnet, dass** der innere Messbereich derart ausgebildet ist, dass auf ihm im Wesentlichen keine von der Probe und/oder dem Probenträger gestreute Strahlung zum Detektor gelangt.

12. Vorrichtung nach einem der Ansprüche 7 bis 11, **dadurch gekennzeichnet, dass** der äußere Messbereich derart ausgebildet ist, dass nur im Wesentlichen durch Streuung in der Probe abgelenktes Licht durch den äußeren Messbereich detektiert wird.

13. Vorrichtung nach einem der Ansprüche 1 bis 12, **dadurch gekennzeichnet, dass** die von der Probe gestreute, aber vorzugsweise nicht die ungestreute transmittierte oder vom Probenträger gestreute Strahlung zum Detektor gelangt.

14. Vorrichtung nach einem der Ansprüche 1 bis 13, **dadurch gekennzeichnet, dass** der Probenträger (12) zwischen der Beleuchtungseinrichtung (10) und dem Detektor (16) angeordnet ist.

15. Vorrichtung nach einem der Ansprüche 1 bis 14, **dadurch gekennzeichnet, dass** der Probenträger (12) als Titerplatte oder als Mikrotiterplatte ausgebildet ist und/oder, dass die Beleuchtungseinrichtung (10) derart ausgebildet ist, dass nur ein Well einer Titerplatte oder Mikrotiterplatte beleuchtet wird.
